# EUROPEAN PATENT APPLICATION

(11) **EP 1 113 090 A1**
(43) Date of publication of application: **04.07.2001**
(21) Application number: 00128636.8
(22) Date of filing: 28.12.2000
(51) Int. Cl.: C23C 24/02, C23C 24/08

(54) **Functional film and method for producing the same**

(30) Priority: 28.12.1999 JP 37278599; 19.05.2000 JP 2000147400
(71) Applicant: TDK Corporation, Tokyo 103-8272 (JP)
(72) Inventor: Iijima, Tadayoshi,, Chuo-ku, Tokyo 103-8272 (JP)
(74) Representative: Pohlmann, Eckart, Dipl.-Phys.

(57) **Abstract**

Functional films capable of exhibiting various functions by the application method, and a method for producing the functional films are provided.

A functional film comprising a compressed layer of functional fine particles obtained by compressing a layer containing the functional fine particles that is formed by application onto a support. The layer containing the functional fine particles is formed by applying a liquid in which the functional fine particles are dispersed onto the support and drying the liquid. The compressed layer of the functional fine particles is preferably obtained by compressing with a compression force of at least 44 N/mm². The functional fine particles are preferably selected from inorganic fine particles. The support is preferably a film made of resin. As the functional films, for example, a conductive film, a magnetic film, a ferromagnetic film, a dielectric film, a ferroelectric film, an electrochromic film, an electroluminescent film, an insulating film, a lightabsorbing film, a light selecting absorbing film, a reflecting film, a reflection preventing film, a catalyst film and a photocatalyst film may be mentioned.

## Description

### BACKGROUND OF THE INVENTION

### Field of the Invention

The present invention relates to a functional film and a method for producing the same. In the present invention, the functional film is defined as follows. Namely, the functional film is a film having a function, which means an action performed through physical and/or chemical phenomenon. The functional films include films having various functions, such as an electrical conductive film, a magnetic film, a ferromagnetic film, a dielectric film, a ferroelectric film, an electrochromic film, an electroluminescent film, an insulating film, a light-absorbing film, a light selecting absorbing film, a reflecting film, a reflection preventing film, a catalyst film and a photocatalyst film.

Particularly, the present invention relates to an electrical conductive film and a method for producing the same. The transparent electrical conductive film can be used as a transparent electrode such as an electroluminescence panel electrode, an electrochromic element electrode, a liquid crystal electrode, a transparent plane heater, or a touch panel, and also as a transparent electromagnetic-wave shielding film.

In particular, the transparent electrical conductive film of the present invention is suitable for usage that requires a reduced degree of scattering, such as a transparent plane heater or a touch panel.

### Disclosure of the Related Art

Hitherto, functional films made of various functional materials are produced by the physical vapor deposition method (PVD) such as vacuum vapor deposition, laser ablation, sputtering, or ion plating, or by the chemical vapor deposition method (CVD) such as heat CVD, light CVD, or plasma CVD. These generally require a large-scale apparatus, and among these, some are not suited for forming a film of large area.

Also, a process is known in which a film is formed by application using the sol-gel method. The sol-gel method is suited for forming a film of large area, but in most cases, an inorganic material must be sintered at a high temperature after the application.

For example, with respect to transparent conductive films, the following description can be made. At present, transparent conductive film is produced mainly by the sputtering method. There are various modes for the sputtering method, for example, a method of forming a film by allowing inert gas ions, which are generated by direct current or high-frequency discharge, to be accelerated to hit the surface of a target in vacuum so as to strike out atoms constituting the target from the surface for deposition on the substrate surface.

The sputtering method is excellent in that a conductive film having a low surface electric resistance can be formed even if it has a large area to some extent. However, it has a disadvantage that the apparatus is large, and the film forming speed is slow. If the conductive film is to have a still larger area from now on, the apparatus will be further enlarged. This raises a technical problem such that the controlling precision must be heightened and, from another point of view, raises a problem of increase in the production cost. Further, although the number of targets is increased to raise the speed in order to compensate for the slowness of the film forming speed, this also is a factor that enlarges the apparatus, thereby raising a problem.

An attempt is made to produce a transparent conductive film by the application method. In a conventional application method, a conductive paint having conductive fine particles dispersed in a binder solution is applied onto a substrate, dried, and hardened to form a conductive film. The application method has an advantage in that a conductive film having a large area can be easily formed, that the apparatus is simple and has a high productivity, and that the conductive film can be produced at a lower cost than by the sputtering method. In the application method, an electric path is formed by contact of the conductive fine particles with each other, whereby the electric conductivity is exhibited. However, the conductive film produced by the conventional application method has an insufficient contact, and the obtained conductive film has a high electric resistance value (i.e. is inferior in conductivity), thereby limiting its usage.

As the production of a transparent conductive film by a conventional application method, Japanese Laid-open Patent Publication No. 9-109259(1997) discloses a production method comprising the first step of applying a paint comprising a conductive powder and a binder resin onto a plastic film for transcription and drying it to form a conductive layer, the second step of pressing (5 to 100 kg/cm²) the conductive layer surface on a smooth surface and heating (70 to 180°C), and the third step of laminating this conductive layer on a plastic film or sheet and heat-press-bonding it.

In this method, a large amount of binder resin is used (100 to 500 parts by weight of conductive powder with respect to 100 parts by weight of binder in the case of inorganic conductive powder; 0.1 to 30 parts by weight of conductive powder with respect to 100 parts by weight of binder in the case of organic conductive powder), so that a transparent conductive film having a low electric resistance value cannot be obtained.

For example, Japanese Laid-open Patent Publication No. 8-199096(1996) discloses a method in which a conductive film forming paint comprising a tin-doped indium oxide (ITO) powder, a solvent, a coupling agent and an organic or inorganic acid salt of metal, and not containing a binder is applied onto a glass plate and calcined at a temperature higher than 300°C. In this method, since a binder is not used, the conductive film will have a low electric resistance value. However, since a calcining step at a temperature higher than 300°C must be carried out, it is difficult to form a conductive film on a support such as a resin film. In other words, the resin film will be melted, carbonized, or burnt by the high temperature. Although it depends on the type of the resin film, the temperature of 130°C may be a limit in the case of polyethylene terephthalate (PET) film, for example.

Japanese Patent Publication No. 2994764(B2)(1999) discloses a production method of a transparent conductive film, wherein a paste made in such a way that super-fine particle powder of ITO is dispersed in a solvent together with a resin is applied onto a resin film, and is subjected to a rolling process by a steel roller, after drying.

Japanese Laid-open Patent Publication No. 7-235220(1995) discloses a method comprising the steps of applying a dispersion liquid, which contains conductive fine particles such as ITO and which does not contain a binder, onto a glass substrate; slowly drying the dispersion liquid; applying an overcoat liquid made of silica sol onto the obtained ITO film; and then drying or calcining after drying. According to the aforesaid Publication, the overcoat film made of silica sol is dried for hardening and shrinking, and the ITO fine particles in the ITO film are brought into firm contact with each other by a hardening-shrinking stress at that time. If the contact between the ITO fine particles is insufficient, the electric resistance of the conductive film is high. In order to obtain a large hardening-shrinking stress, the overcoat film must be subjected to a drying process at a high temperature of 150 to 180°C. However, when the substrate is a resin film, the resin film will be deformed by such a high temperature.

Also, according to the aforesaid Publication, the overcoat made of silica sol contributes to bonding of the conductive film and the glass substrate as well. Namely, the strength of the conductive film is obtained by the overcoat made of silica sol. However, the electric resistance of the conductive film is high and the strength of the film is small unless the application and the hardening-shrinking of the overcoat liquid is carried out. Furthermore, in order to improve the optical characteristics of the conductive film and to reduce the surface resistance, the drying step after application of the dispersion liquid of the conductive fine particles on the glass substrate must be carried out slowly. There is a disadvantage in that cracks may be generated in the overcoat film made of silica sol if the thickness of the film is large.

As a method other than the application method, Japanese Laid-open Patent Publication No. 6-13785(1994) discloses a conductive coating film composed of a compressed powder layer in which at least a part of the voids, preferably the whole of the voids, of a skeleton structure constructed with a conductive substance (metal or alloy) powder is filled with resin, and a resin layer located therebelow. The production method thereof will be described with reference to a case in which a coating film is formed on a plate material as an example. According to the Publication, first a resin, a powder substance (metal or alloy), and a plate material serving as a member to be treated are oscillated or stirred in a container together with a coating film forming medium (steel balls having a diameter of several millimeters), whereby a resin layer is formed on a surface of the member to be treated. Successively, the powder substance is captured and fixed to the resin layer by an adhesive force of the resin layer. Further, the coating film forming medium receiving the oscillation or stirring gives a hitting force to the powder substance receiving the oscillation or stirring, whereby a compressed powder layer is formed. In order to obtain an effect of fixing the compressed powder layer, a considerable amount of the resin is required. Also, the production method is cumbersome as compared with the application method.

As a method other than the application method, Japanese Laid-open Patent Publication No. 9-107195(1997) discloses a method in which a conductive short fiber is sprinkled and deposited on a film such as PVC, followed by a pressing treatment to form an integrated layer of the conductive fiber and the resin. The conductive short fiber is one obtained by depositing a nickel plating or the like on a short fiber such as polyethylene terephthalate. The pressing operation is preferably carried out under a temperature condition in which the resin matrix layer shows thermoplasticity, and it discloses a high-temperature and low-pressure condition of 175°C and 20 kg/cm².

From these backgrounds, it is desired to develop a method in which functional films capable of exhibiting various functions are obtained while utilizing the advantages of the application method that functional films of large area can be easily formed, that the apparatus is simple and has a high productivity, and that the functional films can be produced at a low cost.

Particularly with respect to a conductive film, it is desired to develop a method in which a transparent conductive film having a low electric resistance value is obtained while utilizing the advantages of the application method that a conductive film of large area can be easily formed, that the apparatus is simple and has a high productivity, and that the conductive film can be produced at a low cost.

### SUMMARY OF THE INVENTION

Thus, an object of the present invention is to provide functional films capable of exhibiting various functions by the application method, and to provide a method of producing the functional films by the application method.

In particular, an object of the present invention is to provide a transparent electrical conductive film having a low electric resistance value and preferably having a reduced scattering by the application method and to provide a method of producing the transparent electrical conductive film by the application method. Further, an object of the present invention is to provide a method of producing a transparent electrical conductive film in which a film can be formed without a heating treatment of high temperature and a uniform film without thickness unevenness can be obtained, and a method of producing a transparent electrical conductive film that can meet the increase in the area of the film.

Conventionally, in the application method, it was considered that a functional film cannot be formed without the use of a large amount of binder resin, or in the case where binder resin is not used, the functional film cannot be obtained unless a functional substance is sintered at a high temperature.

With respect to conductive films, it was considered that a conductive film cannot be formed without the use of a large amount of binder resin, or in the case where binder resin is not used, the conductive film cannot be obtained unless a conductive substance is sintered at a high temperature.

Nevertheless, surprisingly as a result of eager studies made by the present inventor, it has been found out that functional films having mechanical strength and being capable of exhibiting various functions can be obtained by compression even without the use of a large amount of binder resin and without calcining at a high temperature, thereby arriving at the present invention. The present inventor have found out that a transparent conductive film having a low resistance value can be obtained with the use of a conductive material, thereby arriving at the present invention.

The present invention is a functional film comprising a compressed coating layer of functional fine particles on a support.

The present invention is a functional film comprising a compressed layer of functional fine particles obtained by compressing a layer containing the functional fine particles that is formed by application onto a support.

The layer containing the functional fine particles is formed by applying a liquid in which the functional fine particles are dispersed onto the support and drying the liquid.

In the aforesaid functional film, the functional fine particles are preferably selected from inorganic fine particles.

In the aforesaid functional film, the compressed layer of the functional fine particles is preferably obtained by compressing with a compression force of at least 44 N/mm².

The aforesaid functional film is selected, for example, from a conductive film, a magnetic film, a ferromagnetic film, a dielectric film, a ferroelectric film, an electrochromic film, an electroluminescent film, an insulating film, a light-absorbing film, a light selecting absorbing film, a reflecting film, a reflection preventing film, a catalyst film and a photocatalyst film.

In the aforesaid functional film, the support is preferably a film made of resin.

Particularly, the present invention relates to a transparent conductive film. If the aforesaid functional film is a conductive film, the aforesaid functional fine particles are conductive fine particles, whereby the functional film has a function as a conductive film.

Namely, the present invention is a transparent conductive film comprising a compressed layer of conductive fine particles obtained by compressing a layer containing the conductive fine particles that is formed by application onto a support.

In this case, the conductive fine particles are preferably conductive inorganic fine particles selected, for example, from the group consisting of tin oxide, indium oxide, zinc oxide, cadmium oxide, antimony-doped tin oxide (ATO), fluorine-doped tin oxide (FTO), tin-doped indium oxide (ITO) and aluminum-doped zinc oxide (AZO).

Also, the present invention is a method of producing a functional film, said method comprising the steps of:
applying a liquid in which the functional fine particles are dispersed onto a support and drying the liquid, thereby to form a layer containing the functional fine particles; and thereafter
compressing said layer containing the functional fine particles to form a compressed layer of the functional fine particles.

In the aforesaid method, said layer containing the functional fine particles is preferably compressed at a compression force of at least 44 N/mm².

In the aforesaid method, said layer containing the functional fine particles is preferably compressed at such a temperature that said support is not deformed.

In the aforesaid method, said layer containing the functional fine particles is preferably compressed using a roll press machine.

If the aforesaid functional film is a conductive film, conductive fine particles are used as the aforesaid functional fine particles. Namely, the present invention is a method of producing a transparent conductive film, said method comprising the steps of:
applying a liquid in which the conductive fine particles are dispersed onto a support and drying the liquid, thereby to form a layer containing the conductive fine particles; and thereafter
compressing said layer containing the conductive fine particles to form a compressed layer of the conductive fine particles.

In the aforesaid method, the dispersion liquid of the conductive fine particles may contain a small amount of resin; however, in particular, it is preferable that the dispersion liquid of the conductive fine particles does not contain resin.

In particular, in the present invention, by impregnating said compressed layer of the conductive fine particles with a transparent substance, a transparent conductive film having a low resistance value and a reduced scattering is provided.

Namely, the present invention is a transparent conductive film comprising a compressed layer of conductive fine particles obtained by compressing a layer containing the conductive fine particles that is formed by application onto a support, wherein said compressed layer of the conductive fine particles is impregnated with a transparent substance.

Furthermore, the present invention is a method of producing a transparent conductive film, said method comprising the steps of:
applying a liquid in which the conductive fine particles are dispersed onto a support and drying the liquid, thereby to form a layer containing the conductive fine particles; and thereafter
compressing said layer containing the conductive fine particles to form a compressed layer of the conductive fine particles, and further
impregnating said formed compressed layer of the conductive fine particles with a transparent substance.

According to the present invention, a functional film is obtained by a simple operation of applying a paint containing functional fine particles onto a support and thereafter compressing it. The functional film according to the present invention has a sufficient mechanical strength and the disadvantage caused by binder resin in the conventional application method is eliminated, so that as a result the intended function is further improved.

According to the present invention, a transparent conductive film is obtained by a simple operation of applying a conductive paint onto a support and thereafter compressing it. The transparent conductive film according to the present invention has an excellent conductivity and an excellent transparency. Further, the transparent conductive film has a sufficient mechanical strength, and the close adhesion between the conductive layer and the support is firm, so that it can be used for a long period of time.

According to the present invention, a transparent conductive film is obtained by a simple operation of applying a conductive paint onto a support, compressing it, and preferably followed by impregnation with a transparent substance. The preferable transparent conductive film according to the present invention has an excellent conductivity and a super excellent transparency. Further, the close adhesion between the conductive layer and the support is firm, so that the transparent conductive film can be used for a long period of time.

Also, according to the method of the present invention, it can meet an increase in the area of the conductive film, the apparatus is simple and has a high productivity, and various functional films including a conductive film can be produced at a low cost.

### BRIEF DESCRIPTION OF THE DRAWINGS

Fig. 1 is a view for describing a 90° peel test in the Examples of the present invention.

Fig. 2 is a plan view schematically illustrating a masking film used in Examples 21-24 of the present invention.

Fig. 3 is a plan view schematically illustrating an exemplary transparent conductive film fabricated in Examples 21-24 of the present invention.

Fig. 4 is a perspective view schematically illustrating an exemplary transparent conductive film fabricated in Examples 21-24 of the present invention.

### DETAILED DESCRIPTION OF THE INVENTION

In the present invention, the functional films are not particularly limited, and include films having various functions such as a conductive film, a magnetic film, a ferromagnetic film, a dielectric film, a ferroelectric film, an electrochromic film, an electroluminescent film, an insulating film, a light-absorbing film, a light selecting absorbing film, a reflecting film, a reflection preventing film, a catalyst film, a photocatalyst film, and the like. Therefore, in the present invention, functional fine particles are used to constitute the aforesaid intended films. The functional fine particles to be used are not particularly limited and may be mainly inorganic fine particles having an agglomeration force. In the production of any of the functional films, by applying a method of the present invention, a functional coating film having a sufficient mechanical strength can be obtained, and the disadvantage caused by binder resin in the conventional application method that makes use of a large amount of binder resin, is eliminated. As a result, the intended function is further improved.

For example, in the production of a transparent conductive film, conductive inorganic fine particles are used such as tin oxide, indium oxide, zinc oxide, cadmium oxide, antimony-doped tin oxide (ATO), fluorine-doped tin oxide (FTO), tin-doped indium oxide (ITO), aluminum-doped zinc oxide (AZO), or the like. Alternatively, conductive organic fine particles may be used. By application of the production method of the present invention, an excellent electric conductivity is obtained.

In the production of a ferromagnetic film, iron oxide type magnetic powder such as γ-Fe₂O₃, Fe₃O₄, Co-FeOₓ, Ba ferrite, etc., ferromagnetic alloy powder mainly containing a ferromagnetic metal element such as α-Fe, Fe-Co, Fe-Ni, Fe-Co-Ni, Co, Co-Ni, etc. as a major component, or the like is used. By application of the production method of the present invention, the saturation magnetic flux density of the magnetic coating film is improved.

In the production of a dielectric film or a ferroelectric film, dielectric or ferroelectric fine particles such as magnesium titanate type, barium titanate type, strontium titanate type, lead titanate type, lead titanate zirconate type (PZT), lead zirconate type, lanthanum-doped lead titanate zirconate type (PLZT), magnesium silicate type, a lead-containing perovskite compound, or the like are used. By application of the method of the present invention, dielectric properties or ferroelectric properties are improved.

In the production of metal oxide films that exhibit various functions, fine particles of metal oxide such as iron oxide (Fe₂O₃), silicon oxide (SiO₂), aluminum oxide (Al₂O₃), titanium dioxide (TiO₂), titanium oxide (TiO), zinc oxide (ZnO), zirconium oxide (ZrO₂), tungsten oxide (WO₃), or the like are used. By application of the production method of the present invention, the packing density of metal oxide in the film increases to improve various functions. For example, if SiO₂ or Al₂O₃ carrying a catalyst is used, a porous catalyst film having a practicable strength is obtained. If TiO₂ is used, a photocatalyst function is improved. Further, if WO₃ is used, an improvement of chromophoric action in an electrochromic display element is obtained.

Further, in the production of an electroluminescent film, fine particles of zinc sulfide (ZnS) are used. By application of the production method of the present invention, an inexpensive electroluminescent film can be produced by the application method.

In the present invention, a liquid in which functional fine particles selected from the above-mentioned various functional fine particles are dispersed therein is used as a functional paint in accordance with the object. The functional paint is applied onto a support and dried to form a layer containing the functional fine particles. Thereafter, the layer containing the functional fine particles is compressed to form a compressed layer of the functional fine particles, thereby to obtain a functional film.

The liquid for dispersing the functional fine particles such as conductive fine particles is not particularly limited, and various already known liquids can be used. For example, as the liquid, saturated hydrocarbons such as hexane, aromatic hydrocarbons such as toluene and xylene, alcohols such as methanol, ethanol, propanol and butanol, ketones such as acetone, methyl ethyl ketone, methyl isobutyl ketone and diisobutyl ketone, esters such as ethyl acetate and butyl acetate, ethers such as tetrahydrofuran, dioxane and diethyl ether, amides such as N,N-dimethylformamide, N-methylpyrrolidone (NMP) and N,N-dimethylacetamide, halogenated hydrocarbons such as ethylene chloride and chlorobenzene, and others may be mentioned. Among these, liquids having a polarity are preferable, and in particular, alcohols such as methanol and ethanol, and amides such as NMP having an affinity with water are suitable because the dispersion is good without the use of a dispersant. These liquids can be used either alone or as a mixture of two or more kinds thereof. Further, a dispersant may be used depending on the type of the liquid.

Also, water can be used as the liquid. If water is used as the liquid, the support must be hydrophilic. The resin film is usually hydrophobic and is water-repellent, so that a uniform film is not likely to be obtained. In the case where the support is a resin film, it is necessary to mix an alcohol with water or to make a hydrophilic surface of the support.

The amount of the liquid to be used is not particularly limited, and may be such that the dispersion liquid of the fine particles has a viscosity suitable for application methods as mentioned later. For example, 100 to 100,000 parts by weight of liquid is used with respect to 100 parts by weight of the fine particles. The amount of the liquid may be suitably selected in accordance with the type of the fine particles and the liquid. Generally, according as the particle diameter of the fine particles becomes small, the specific surface area of the fine particles becomes large, thereby the viscosity of the dispersion liquid tends to become high. When the fine particles having large specific surface area are used, a larger amount of the liquid is preferably used to reduce the solid concentration in the dispersion liquid. Further, when the intended thickness of the coating film is small, the dispersion liquid with a low solid concentration by using a larger amount of the liquid is preferably used.

The dispersion of the fine particles into the liquid may be carried out by a known dispersion technique. For example, the dispersion is carried out by the sand grinder mill method. At the time of dispersion, use of a medium such as zirconia beads is also preferable in order to loosen the agglomeration of the fine particles. Further, at the time of dispersion, one must take care not to mix impurities such as dust.

It is preferable that the dispersion liquid of the fine particles does not contain resin. In other words, the amount of resin is preferably zero. If the dispersion liquid of the fine particles does not contain resin, the layer containing the functional fine particles (before compression), which layer is formed by application, does not contain resin, either.

In the conductive film, if resin is not used, the contact between the conductive fine particles is not inhibited by the resin. Therefore, the electric conductivity among the conductive fine particles is ensured, and the electric resistance value of the obtained conductive film is low. Resin can be contained in an amount that does not deteriorate the conductivity; however, the amount is extremely small as compared with the amount of resin used as a binder resin in the prior art. For example, the upper limit of resin contained in the dispersion liquid is about 19 parts by volume with respect to 100 parts by volume of the conductive fine particles as represented by volume before dispersion. In the prior art, one has to use a large amount of binder in order to obtain a mechanical strength of the coating film, since strong compression is not carried out. If a resin is used in such an amount as to function as a binder, the contact between the conductive fine particles is inhibited by the binder, and the migration of electrons among the fine particles is inhibited to reduce the electric conductivity. In view of obtaining a high conductivity, the amount of resin contained in the dispersion liquid should be less than 3.7 parts by volume, and is particularly preferably zero by volume, with respect to 100 parts by volume of the conductive fine particles as represented by volume before dispersion.

In the functional films using the other functional fine particles including WO₃ fine particles, TiO₂ fine particles, or the like, if resin is not used, the contact between the fine particles is not inhibited by the resin, so that an improvement is achieved in various functions. Resin can be contained in an amount that does not inhibit the contact between the fine particles and does not deteriorate the various functions; however, the amount is, for example, at most about 80 parts by volume, preferably at most 19 parts by volume, with respect to 100 parts by volume of the respective fine particles.

In the catalyst film using Al₂O₃ fine particles or the like, if resin is not used, the surface of the fine particles having a catalyst function is not covered with the resin. Therefore, the function as the catalyst is improved. In the catalyst film, the larger the number of voids is in the inside of the film, the larger the number of active points as the catalyst. In view of this point, it is preferable not to use resin as much as possible.

Thus, it is preferable not to use resin at the time of compression (namely, in the dispersion liquid of the functional fine particles); and even if resin is used, it is preferably used in a small amount. The amount of the resin to be used may be suitably determined because the amount may vary to some extent depending on the object of the functional film.

Various additives may be blended with the dispersion liquid of the fine particles within a range that satisfies the performance required in the function such as conductivity or catalyst action. For example, additives such as an ultraviolet absorber, a surfactant, and a dispersant may be blended.

The support is not particularly limited, and various ones such as resin film, glass, ceramics, metal, cloth, paper, and others may be used. However, glass, ceramics, or the like has a high possibility of cracking in a later step of compression, so that one has take this into account. Further, the support to be used can be in a film form, foil form, mesh form, fabric form, or the like.

The support is suitably a resin film that is not cracked even if the compression force of the compression step is increased. As mentioned later, the resin film is preferable in view of good close adhesion of the layer of functional fine particles such as conductive fine particles to the film, and is also suitable for usage that requires weight reduction. In the present invention, since a pressing step at a high temperature or a calcining step is not carried out, the resin film can be used as the support.

As the resin film, for example, polyester film such as polyethylene terephthalate (PET), polyolefin film such as polyethylene or polypropylene, polycarbonate film, acrylic film, norbornene film (Arton manufactured by JSR Co., Ltd., or the like), and others may be mentioned.

In the case of a resin film such as PET film, a part of the functional fine particles such as conductive fine particles that are in contact with the PET film is "buried" in the PET film in the compression step after drying, whereby the fine particle layer closely adheres to the PET film well.

The dispersion liquid of the fine particles is applied onto the support and dried to form a layer containing the functional fine particles such as a layer containing the conductive fine particles.

The application of the dispersion liquid of the fine particles onto the support is not particularly limited, and may be carried out by a known method. For example, the application of the dispersion liquid having a high viscosity of 1,000 cps or more may be carried out by the application methods such as the blade method, the knife method, or the like. The application of the dispersion liquid having a low viscosity of less than 500 cps may be carried out by the application methods such as the bar coat method, the kiss coat method, the squeeze method, or the like. Also, in case of the dispersion liquid having a low viscosity, the dispersion liquid can be allowed to adhere onto the support by atomizing, spraying, or the like. Further, independently of viscosity of the dispersion liquid, it is possible to use the application methods such as the reverse roll method, the direct roll method, the extrusion nozzle method, the curtain method, the gravure roll method, the dip method, or the like.

The drying temperature is preferably about 10 to 150°C although it depends on the type of the liquid used for dispersion. If the temperature is lower than 10°C, condensation of moisture in air is liable to occur, whereas if it exceeds 150°C, the resin film support will be deformed. Also, at the time of drying, one must take care not to allow impurities to adhere to the surface of the fine particles.

The thickness of the layer containing the functional fine particles such as the layer containing the conductive fine particles after application and drying may be about 0.1 to 10 µm, though it depends on the compression condition in the next step or on the usage of the functional film such as the conductive film finally obtained after compression.

Thus, if the functional fine particles such as the conductive fine particles are dispersed in liquid for application and drying, it is easy to form a uniform film. If the dispersion liquid of the fine particles is applied and dried, the fine particles form a film even if a binder is not present in the dispersion liquid. The reason why the film is formed even in the absence of a binder is not necessarily clear; however, when the amount of liquid decreases by drying, the fine particles gather by a capillary force. Further, it seems that, since they are fine particles, the specific surface area is large and the agglomeration force is strong to form a film. However, the strength of the film at this stage is weak. Also, in a conductive film, it has a high resistance value and has a large variation of resistance value.

Next, the formed layer containing the functional fine particles such as the layer containing the conductive fine particles is compressed to obtain a compressed layer of the functional fine particles such as the conductive fine particles. The compression improves the strength of the film. Namely, the compression increases the number of contact points among the functional fine particles such as the conductive fine particles to increase the contact area. For this reason, the coating film strength is increased. Since the fine particles are originally liable to be agglomerated, the compression makes a firm film.

In the conductive film, the coating film strength increases and the electric resistance decreases. In the catalyst film, the coating film strength increases and the film will be a porous film, since a resin is not used or used in a small amount. Therefore, a higher catalyst function is obtained. In the other functional films, the film can be made into a film having a high strength in which the fine particles are connected with each other, and also the filling amount of fine particles per unit volume will be large, since a resin is not used or used in a small amount. For this reason, a higher function is obtained in each film.

The compression is preferably carried out at a compression force of at least 44 N/mm². If it is carried out at a low pressure of less than 44 N/mm², the layer containing the functional fine particles such as the layer containing the conductive fine particles cannot be fully compressed, and it is difficult to obtain a functional film such as a conductive film being excellent in functionality such as conductivity. A compression force of at least 138 N/mm² is more preferable, and a compression force of at least 183 N/mm² is still more preferable. According as the compression force is higher, the strength of the coating film is improved, and the close adhesion between the functional layer and the support will be improved. In the conductive film, a film being more excellent in conductivity is obtained, the strength of the conductive film is improved, and the close adhesion between the conductive layer and the support will be firm. According as the compression force is raised, the pressure resistance of the apparatus must be raised, so that a compression force up to 1000 N/mm² is generally suitable.

Further, the compression is preferably carried out at such a temperature that the support is not deformed. If the support is resin film, for example, it will be a temperature range below the glass transition temperature (secondary transition temperature) of the resin. If the support is made of metal, it will be a temperature range such that the metal is not melted.

The compression is not particularly limited and may be carried out by sheet press or roll press; however, it is preferably carried out by means of a roll press machine. The roll press is a method in which the film to be compressed is sandwiched between rolls for compression and the rolls are rotated. The roll press is suitable because a high uniform pressure can be applied in the roll press, and the productivity of the roll press is higher than that of the sheet press.

The roll temperature of the roll press machine is preferably an ordinary temperature (an environment suitable for human work) from the viewpoint of productivity. If the compression is carried out in a heated atmosphere or with heated rolls (hot press), there will be a disadvantage such that the resin film is elongated when the compression pressure is increased. If the compression pressure is reduced in order to prevent the resin film from being elongated under heating, the mechanical strength of the coating film decreases. In the conductive film, the mechanical strength of the coating film decreases and the electric resistance rises. It is also preferable to control the temperature so that the roll temperature may not rise by heat generation in the case where continuous compression is carried out by means of a roll press machine.

If there is a reason to reduce the adhesion of moisture to the fine particle surface as much as possible, the heated atmosphere may be adopted in order to reduce the relative humidity of the atmosphere; however, the temperature range is within a range such that the film is not easily elongated. Generally, it will be a temperature range below the glass transition temperature (secondary transition temperature). By taking the variation of humidity into account, it may be set at a temperature which is a little higher than the temperature that achieves the required humidity.

If the support is made of metal, the heated atmosphere can be made within a temperature range such that the metal is not melted.

Here, the glass transition temperature of the resin film is determined by measuring the dynamic viscoelasticity, and refers to the temperature at which the dynamic loss of the main dispersion is at its peak. For example, with regard to PET film, its glass transition temperature is approximately around 110°C.

The roll of the roll press machine is preferably a metal roll because a strong pressure can be applied. Also, if the roll surface is soft, the fine particles may be transferred to the rolls at the compressing time, so that the roll surface is preferably treated with a hard film such as hard chromium, spraying film of ceramics, a film obtained by ionic plating Of TiN etc., DLC(diamond like carbon), or the like.

In this manner, the compressed layer of the functional fine particles such as the conductive fine particles is formed. The thickness of the compressed layer of the functional fine particles such as the conductive fine particles may be about 0.05 to 10 µm, preferably 0.1 to 5 µm, more preferably 0.1 to 3 µm, and most preferably 0.1 to 2 µm, though it depends on the usage.

The functional film such as the transparent conductive film thus obtained shows a functionality such as an excellent conductivity or catalyst action, has a practically sufficient film strength even though it is made without the use of a binder resin or with the use of a small amount of resin such that it does not function as a binder, and also has an excellent close adhesion with the support.

Next, an example will be described in which the present invention is applied to a transparent conductive film.

In the present invention, a liquid in which conductive fine particles are dispersed is used as a conductive paint. This conductive paint is applied onto a support and dried to form a layer containing the conductive fine particles. Thereafter, the layer containing the conductive fine particles is compressed to form a compressed layer of the conductive fine particles, thereby to obtain a conductive film. And further, the formed compressed layer of the conductive fine particles are preferably impregnated with a transparent substance.

The conductive fine particles to be used in the transparent conductive film are not particularly limited as long as they do not deteriorate the transparency of the conductive film to a great extent, and may be inorganic conductive fine particles. Alternatively, there are cases in which organic conductive fine particles are used.

In the present invention, transparency means transmittance of visible light. With respect to the degree of scattering of light, desired level differs depending on the usage of the conductive film. In the present invention, those generally referred to as being translucent and having a scattering are also included. However, by impregnating the compressed layer of the conductive fine particles with a transparent substance, the conductive film of the present invention has the extremely reduced scattering of light and excellent transparency.

As the inorganic conductive fine particles, there are tin oxide, indium oxide, zinc oxide, cadmium oxide, and others , and fine particles of antimony doped tin oxide (ATO), fluorine doped tin oxide (FTO), tin doped indium oxide (ITO), aluminum doped zinc oxide (AZO), and the like are preferable. Further, ITO is preferable in view of obtaining a more excellent conductivity. Alternatively, those in which the surface of fine particles such as barium sulfate having transparency is coated with an inorganic material such as ATO, ITO, or the like can be used. The particle diameter of these fine particles is different depending on the degree of scattering required in accordance with the usage of the conductive film, and may generally vary depending on the shape of the particles; however, it is generally at most 10 µm, preferably at most 1.0 µm, more preferably from 5 nm to 100 nm.

As the organic conductive fine particles, for example, those in which the surface of the resin fine particles is coated with a metal material, or the like may be mentioned.

If the conductive paint contains resin, the resin has a function of reducing the scattering of conductive films. In the present invention, however, as described later, the compressed layer is preferably impregnated with a transparent substance after the compressed layer of conductive fine particles is formed, so that the scattering of the conductive films is greatly reduced. Therefore, there is little need for allowing the dispersion liquid of the fine particles to contain resin.

In the present invention, the obtained compressed layer of the conductive fine particles is preferably impregnated with a transparent substance.

The obtained compressed layer of the conductive fine particles may generate scattering of light because it is a porous film. By impregnating the compressed layer with a transparent substance, the scattering of light can be reduced. The electric resistance of the obtained conductive film remains low since the voids in the compressed layer is impregnated with a transparent substance after the compressed layer of the conductive fine particles having a low electric resistance is formed, unlike the case in which a transparent substance is added into the dispersion liquid of the conductive fine particles from the beginning to form a compressed layer containing the transparent substance.

In the present invention, impregnation with a transparent substance refers to allowing an impregnation liquid containing a transparent substance (or its precursor) to permeate into voids in the porous compressed layer of conductive fine particles, and thereafter solidifying the permeated transparent substance by a suitable method. Alternatively, the liquid used for impregnation may be present as it is, depending on the usage of the conductive film.

The transparent substance to be used for impregnation is not particularly limited, and substances such as organic polymers, intermediates of organic polymers, oligomers, monomers, and the like may be mentioned. Specifically, organic polymers such as fluoropolymer, silicone resin, acrylic resin, polyvinyl alcohol, carboxymethylcellulose, hydroxypropylcellulose, regenerated cellulose, diacetylcellulose, polyvinyl chloride, polyvinyl pyrrolidone, polyethylene, polypropylene, SBR, polybutadiene, polyethylene oxide, polyester, polyurethane, and others may be mentioned. The compressed layer may be impregnated with a precursor (monomer or oligomer) of these organic polymers, and the precursor may be converted into these organic polymers by carrying out an ultraviolet ray treatment or a heat treatment after impregnation.

Further, inorganic substances, glass, or the like may be used, if the substances can be in the liquid state in the time of impregnation. If the temperature of the impregnation liquid is high, a support which is unaffected by the high temperature may be used.

When resin film is used as the support, as the transparent substance to be used for impregnation, one may use an inorganic substance capable of forming a film at a low temperature such that the support resin film is not affected. For example, titanium peroxide, tungsten peroxide, and others may be used. An impregnation liquid obtained by dissolving titanium peroxide into water is applied onto the compressed layer, water is dried, and a heat treatment is carried out at about 100°C to form titanium oxide. Alternatively, a solution of metal alkoxide may be applied onto the compressed layer by the sol-gel method, and a heat treatment may be carried out at a low temperature about 100°C to form a metal oxide. Polysilazane may be used. Also, the compressed layer may be impregnated with liquid such as silicone oil.

The transparent substance to be used for impregnation does not necessarily have a property of hardening-shrinking, and can be selected from a variety of transparent substances.

When metal or ceramics is used as the support, molten glass may be used for impregnation.

The impregnation liquid can be obtained by dissolving a transparent substance or its precursor into a suitable solvent. The solvent is not particularly limited and various kinds of already known liquids can be used. For example, saturated hydrocarbons such as hexane, aromatic hydrocarbons such as toluene and xylene, alcohols such as methanol, ethanol, propanol and butanol, ketones such as acetone, methyl ethyl ketone, methyl isobutyl ketone and diisobutyl ketone, esters such as ethyl acetate and butyl acetate, ethers such as tetrahydrofuran, dioxane and diethyl ether, amides such as N,N-dimethylformamide, N-methylpyrrolidone (NMP) and N,N-dimethylacetamide, halogenated hydrocarbons such as ethylene chloride and chlorobenzene, water, and others may be mentioned. For facilitating the impregnation, it is preferable to adjust the viscosity of the impregnation liquid.

Further, if the transparent substance or its precursor is in a liquid form such as a monomer or oligomer, the transparent substance or its precursor may be used, as it is, as the impregnation liquid without dissolving it into a solvent. Alternatively, for facilitating the impregnation, the impregnation liquid may be prepared by diluting the transparent substance or its precursor with a suitable solvent.

Various additives may be blended with the impregnation liquid. For example, additives such as an ultraviolet absorber, an infrared absorber, and a colorant may be blended.

The impregnation with the transparent substance can be carried out by a method such as application of the impregnation liquid onto a surface of the compressed layer of the conductive fine particles or immersion of the compressed layer into the impregnation liquid. Since the compressed layer is porous, the impregnation liquid penetrates into voids by a capillary force.

The application of the impregnation liquid onto the compressed layer of the conductive fine particles is not particularly limited, and may be carried out by a known method. For example, it may be carried out by an application method such as the reverse roll method, the direct roll method, the blade method, the knife method, the extrusion nozzle method, the curtain method, the gravure roll method, the bar coat method, the dip method, the kiss coat method, the squeeze method, or the like. Also, the impregnation liquid can be allowed to adhere onto the compressed layer for permeation by atomizing or spraying.

After allowing the impregnation liquid to permeate into voids in the compressed layer, the permeated transparent substance is solidified by a suitable method. For example, it is possible to apply a method of solidifying the transparent substance by drying the solvent after impregnation, a method of drying the solvent after impregnation and then hardening the organic polymer and/or the monomer and/or the oligomer by carrying out an ultraviolet ray treatment or a heat treatment, a method of carrying out a heat treatment on the metal peroxide or metal alkoxide at a temperature up to about 100°C to form a metal oxide after impregnation, or the like method. A suitable method is adopted in accordance with the transparent substance that is put to use.

The amount of the impregnation liquid to be applied onto the compressed layer of the conductive fine particles is suitably selected in accordance with the usage of the conductive film. For example, if one wishes to bring the whole surface of the conductive film into a state capable of electrical contact, the amount of the impregnation liquid may be such as to fill the voids in the compressed layer. Alternatively, a protective layer of the transparent substance may be formed on the compressed layer simultaneously with the impregnation by applying the impregnation liquid in an amount more than needed in filling the voids in the compressed layer. In this case, the thickness of the protective layer is typically about 0.1 µm to 100 µm. The amount of the impregnation liquid to be applied may be selected in accordance with the thickness of the protective layer.

Further, if one wishes to leave a conductive portion in a desired part (typically, an end part) on the surface of the conductive film, a part where the protective layer is not formed may be ensured by a masking treatment or the like. Alternatively, a part of the protective layer may be removed after forming the protective layer.

By such impregnation with a transparent substance, the surface of the compressed layer of the conductive fine particles will have a reduced scattering of light.

### EXAMPLES

Hereafter, the present invention will be described with reference to Examples thereof; however, the present invention is not limited to these Examples alone.

Examples 1 to 6 and Comparative Example 1 are examples in which ATO fine particles are used as the conductive fine particles in order to obtain a transparent conductive film for use as a CRT electromagnetic wave shield.

### [Example 1]

To 100 parts by weight of ATO fine particles having a primary particle diameter of 10 to 30 nm (SN-100P, manufactured by Ishihara Sangyo Kaisha Ltd.) were added 300 parts by weight of ethanol, and dispersion was carried out by means of a dispersion machine with the use of zirconia beads as a medium. The obtained coating liquid was applied onto a PET film having a thickness of 50 µm by means of a bar coater and dried by supplying hot air of 50°C. The obtained film will be hereafter referred to as an ATO film before compression. The ATO-containing coating layer had a thickness of 1.7 µm.

First, a preliminary experiment for confirming the compression pressure was carried out.

By means of a roll press machine equipped with a pair of metal rolls having a diameter of 140 mm (whose roll surface had been subjected to hard chromium plating treatment), the aforesaid ATO film before compression was sandwiched and compressed at room temperature (23°C) without rotating the rolls and without heating the rolls. At this time, the pressure per unit length in the film width direction was 1,000 N/mm. Next, the pressure was released and the length of the compressed part in the film length direction was examined and found out to be 2 mm. From this result, it is found out that the film had been compressed by a pressure of 500 N/mm² per unit area.

Next, the aforesaid ATO film before compression, which was the same one as used in the preliminary experiment, was sandwiched between the metal rolls and compressed under the aforesaid condition, and the rolls were rotated to compress the film at a feeding speed of 5 m/min. Thus, a compressed ATO film was obtained. The ATO coating layer after compression had a thickness of 1.0 µm.

### (Electric resistance)

The film having a conductive layer formed thereon was cut into a size of 50 mm x 50 mm. The electric resistance was measured by applying a tester to two points on diagonally positioned corners and was found out to be 65 kΩ.

### (90° peel test)

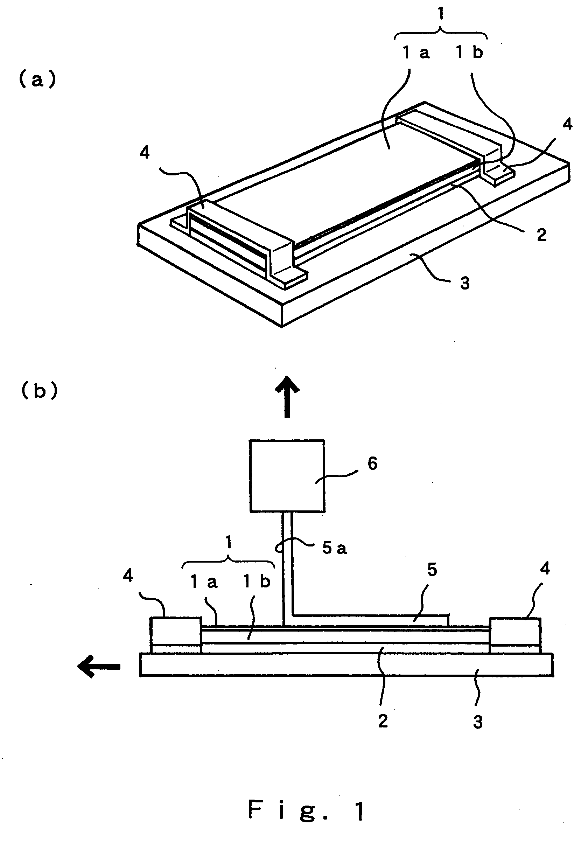

A 90° peel test was carried out in order to evaluate the close adhesion of the conductive layer to the support film and the strength of the conductive layer. An explanation thereof will be given with reference to Fig. 1.

A double-sided adhesive tape (2) was stuck onto a surface of a support film (1b) opposite to the surface having a conductive layer (1a) formed thereon in a test sample (1) having the conductive layer formed. This was cut into a size of 25 mm x 100 mm. The test sample (1) was stuck onto a stainless steel plate (3). A cellophane adhesive tape (width 12 mm, No. 29, manufactured by Nitto Denko Corporation) (4) was stuck onto both ends (25 mm sides) of the sample (1) so that the test sample (1) would not be peeled off (Fig. 1(a)).

A cellophane adhesive tape (width 12 mm, No. 29, manufactured by Nitto Denko Corporation) (5) was stuck onto the conductive film (1a) surface of the test sample (1) so that the tape (5) would be parallel to the longitudinal side of the sample (1). The stuck length of the cellophane tape (5) and the sample (1) was 50 mm. The end portion of the tape (5) which was not stuck was attached to a tension gage (6), and the test sample (1) was set so that the angle formed between the stuck surface and the non-stuck surface (5a) of the cellophane tape (5) would be 90°. The cellophane tape (5) was pulled and peeled off at a speed of 100 mm/min. At this time, the speed at which the tape (5) was peeled off was made equal to the speed at which the stainless steel plate (3) having the test sample (1) stuck thereon moved so that the angle formed between the non-stuck surface (5a) of the cellophane tape (5) and the test sample (1) surface would always be 90°. The force (F) needed in peeling was measured by the tension gage (6) (Fig. 1(b)).

After the test, the surface of the peeled conductive layer and the surface of the cellophane tape were examined. If the adhesive remained on both of the surfaces, it means that the adhesive layer of cellophane tape was destroyed and not that the conductive layer was destroyed. Namely, it means that the strength of the adhesive was a value of the force (F) needed in peeling, so that the strength of the conductive coating layer was equal to or more than the value (F).

In the present test, since the upper limit of the strength of the adhesive is 6 N/12 mm, those represented as 6 N/12 mm in Table 1 are cases in which the adhesive remained on both surfaces as described above, and indicate that the close adhesion and the strength of the conductive layer are at least 6 N/12 mm. In the cases of a value smaller than this, the adhesive is absent on the surface of the conductive layer, and a part of the conductive layer adhered to the surface of the cellophane tape, and it is indicated that the destruction occurred in the coating layer thickness at that value. If the value is 3 N/12 mm or more, the close adhesion and the strength of the conductive layer are at practical use level.

From the result of the above 90° peel test, it was found out that a force of 6 N/12 mm was needed in peeling the cellophane tape off in Example 1. On examination of the surface of the coating layer after the peel test, the adhesive of the cellophane tape adhered on the surface. The adhesive surface of the peeled cellophane tape was examined and found out to have an adhesiveness. Therefore, the strength of the coating layer was at least 6 N/12 mm.

### [Example 2]

A preliminary experiment was carried out in the same manner as in Example 1, and thereafter a compressed ATO film was obtained except that the compression was carried out by changing the pressure per unit length in the film width direction to 660 N/mm in Example 1. In the preliminary experiment, the compression was carried out; the roll press machine was not rotated; then the pressure was released; and the length of the compressed part in the film length direction was examined and found out to be 1.9 mm. From this result, the pressure per unit area was found out to be 347 N/mm². In the following Examples, the pressure per unit area was calculated in the same manner. The thickness of the ATO coating layer after compression was 1.0 µm. Here, the ATO film used in Example 2 before compression was similar to the one prepared in Example 1, and the same applies in the following Examples 3 to 6 and Comparative Example 1 as well.

The compressed ATO film had an electric resistance of 75 kΩ. As a result of the 90° peel test, it was found out that a force of 6 N/12 mm was needed in peeling the cellophane tape off. On examination of the surface of the coating layer after the peel test, the adhesive of the cellophane tape adhered on the surface. The adhesive surface of the peeled cellophane tape was examined and found out to have an adhesiveness. Therefore, the strength of the coating layer was at least 6 N/12 mm.

### [Examples 3 to 6]

A compressed ATO film was obtained in the same manner as in Example 1 except that the compression was carried out by changing the compression pressure respectively to the values shown in Table 1. The electric resistance was measured and the 90° peel test was carried out.

### [Comparative Example 1]

The compression was not carried out in Example 1. Namely, a physical property test was carried out on an ATO film of Example 1 before compression. The ATO film which had not been subjected to compression treatment had an electric resistance of 4500 kΩ. From the result of 90° peel test, it was found out that a force of 0.8 N/12 mm was needed in peeling the cellophane tape off.

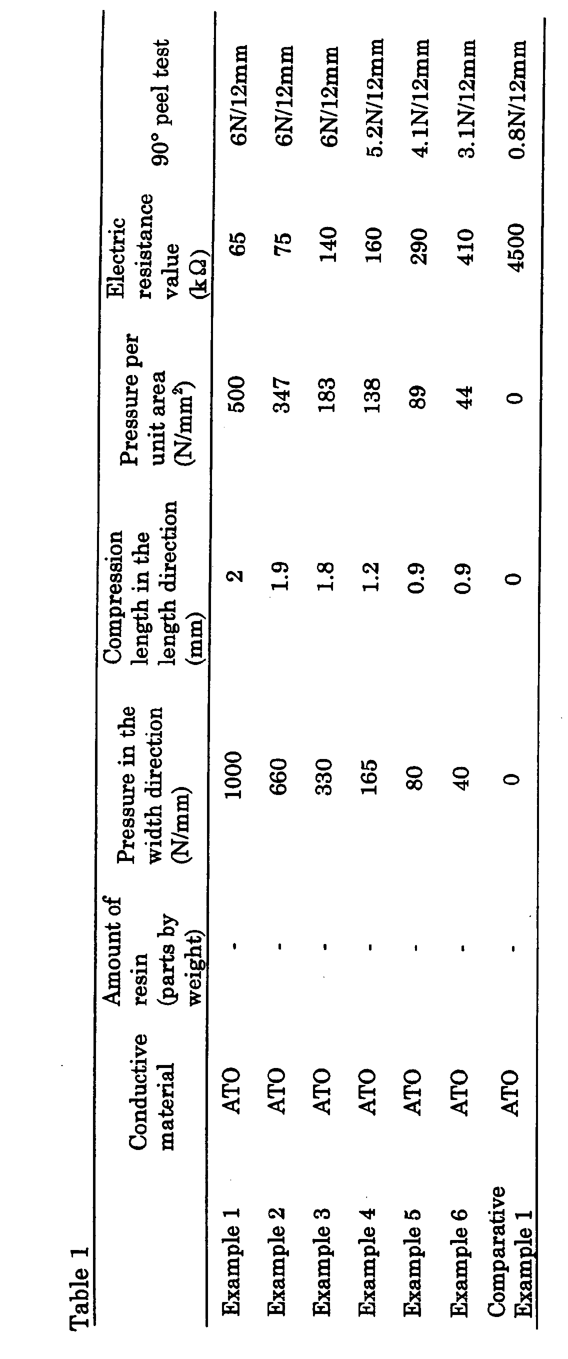

The results of measurement of Examples 1 to 6 and Comparative Example 1 are shown in Table 1. The conductive films of Examples 1 to 6 each had a low electric resistance value, had a large coating layer strength, and was excellent in close adhesion between the conductive layer and the support film. From Examples 1 to 6, it was found out that, according as the pressing pressure increased, the electric conductivity became better, the coating layer strength became larger, and the close adhesion between the conductive layer and the support film became firm to such an extent that the adhesive of the cellophane tape remained on the conductive surface. Also, the conductive films of Examples 1 to 6 each were excellent in transparency in terms of visible light transmittance.

In contrast, in Comparative Example 1, since the compression step was not carried out, the electric resistance value was higher and the coating layer strength was inferior as compared with those of Examples 1 to 6.

Examples 7 to 17 and Comparative Examples 2 to 4 are examples in which ITO fine particles that can provide a lower electric resistance than ATO were used as the conductive fine particles in order to obtain a transparent conductive film for use as an electroluminescence panel electrode.

### [Example 7]

To 100 parts by weight of ITO fine particles having a primary particle diameter of 10 to 30 nm (manufactured by DOWA MINING Co., Ltd.) were added 300 parts by weight of ethanol, and dispersion was carried out by means of a dispersion machine with the use of zirconia beads as a medium. The obtained coating liquid was applied onto a PET film having a thickness of 50 µm by means of a bar coater and dried by supplying hot air of 50°C. The obtained film will be hereafter referred to as an ITO film before compression. The ITO-containing coating layer had a thickness of 1.7 µm.

In the same manner as in Example 1, the ITO film before compression was compressed at a pressure of 1,000 N/mm per unit length in the film width direction, at a pressure of 500 N/mm² per unit area, and at a feeding speed of 5 m/min with the use of a roll press machine, thereby to obtain a compressed ITO film. The ITO coating layer after compression had a thickness of 1.0 µm.

The compressed ITO film had an electric resistance of 3 kΩ. From the result of the 90° peel test, the coating layer strength was at least 6 N/12 mm.

### [Examples 8 to 12]

A compressed ITO film was obtained in the same manner as in Example 7 except that the compression was carried out by changing the compression pressure respectively to the values shown in Table 2. The electric resistance was measured and the 90° peel test was carried out.

### [Comparative Example 2]

The compression was not carried out in Example 7. Namely, a physical property test was carried out on an ITO film of Example 7 before compression. The ITO film which had not been subjected to compression treatment had an electric resistance of 340 kΩ. From the result of 90° peel test, it was found out that a force of 1.2 N/12 mm was needed in peeling the cellophane tape off.

### [Example 13]

A compressed ITO film was obtained in the same manner as in Example 8 except that the feeding speed at the time of compression was changed to 2.5 m/min. The electric resistance was measured and the 90° peel test was carried out.

### [Example 14]

Polyvinylidene fluoride (PVDF, density of 1.8 g/cm³) was used as the resin. A resin solution was prepared by dissolving 100 parts by weight of PVDF into 900 parts by weight of NMP. To 100 parts by weight of ITO fine particles having a primary particle diameter of 10 to 30 nm (density of 6.9 g/cm³, manufactured by DOWA MINING Co., Ltd.) were added 50 parts by weight of the resin solution and 375 parts by weight of NMP, and dispersion was carried out by means of a dispersion machine with the use of zirconia beads as a medium. The obtained coating liquid was applied onto a PET film having a thickness of 50 µm by means of a bar coater and dried (100°C, 3 minutes), thereby to obtain an ITO film before compression (the amount of PVDF was 19 parts by volume with respect to 100 parts by volume of the ITO fine particles).

In the same manner as in Example 1, the film was compressed at a pressure of 660 N/mm per unit length in the film width direction, at a pressure of 347 N/mm² per unit area, and at a feeding speed of 5 m/min with the use of a roll press machine, thereby to obtain a compressed ITO film. The ITO coating layer after compression had a thickness of 1.0 µm. The electric resistance was measured and the 90° peel test was carried out.

The result of the 90° peel test was 5 N/12 mm. This is due to the fact that, since the film was compressed at a high pressure, PVDF oozed out onto the coating layer surface to cause decrease in close adhesion of the cellophane tape onto the coating layer surface, so that the coating layer had not been destroyed. Therefore, the coating layer strength was at least 5 N/ 12 mm.

### [Examples 15 to 17]

A compressed ITO film was obtained in the same manner as in Example 14 except that the compression was carried out by changing the compression pressure respectively to the values shown in Table 2. The electric resistance was measured and the 90° peel test was carried out.

### [Comparative Example 3]

The compression was not carried out in Example 14. Namely, a physical property test was carried out on an ITO film of Example 14 before compression. The ITO film which had not been subjected to compression treatment had an electric resistance of 320 kΩ. From the result of 90° peel test, it was found out that a force of 1 N/12 mm was needed in peeling the cellophane tape off.

### [Comparative Example 4]

A resin solution was prepared by dissolving 100 parts by weight of PVDF into 900 parts by weight of NMP. To 100 parts by weight of ITO fine particles having a primary particle diameter of 10 to 30 nm (manufactured by DOWA MINING Co., Ltd.) were added 1,000 parts by weight of the resin solution and 900 parts by weight of NMP, and dispersion was carried out by means of a dispersion machine with the use of zirconia beads as a medium. The obtained coating liquid was applied onto a PET film having a thickness of 50 µm by means of a bar coater and dried (100°C, 3 minutes), thereby to obtain an ITO film. The ITO coating layer had a thickness of 1.0 µm. The electric resistance was measured, and the 90° peel test was carried out (the amount of PVDF was 383 parts by volume with respect to 100 parts by volume of the ITO fine particles).

The result of the 90° peel test was 3.4 N/12 mm. This is due to the fact that, since the amount of resin was large, PVDF oozed out onto the coating layer surface to cause decrease in close adhesion of the cellophane tape onto the coating layer surface, so that the coating layer had not been destroyed. Therefore, the coating layer strength was at least 3.4 N/ 12 mm.

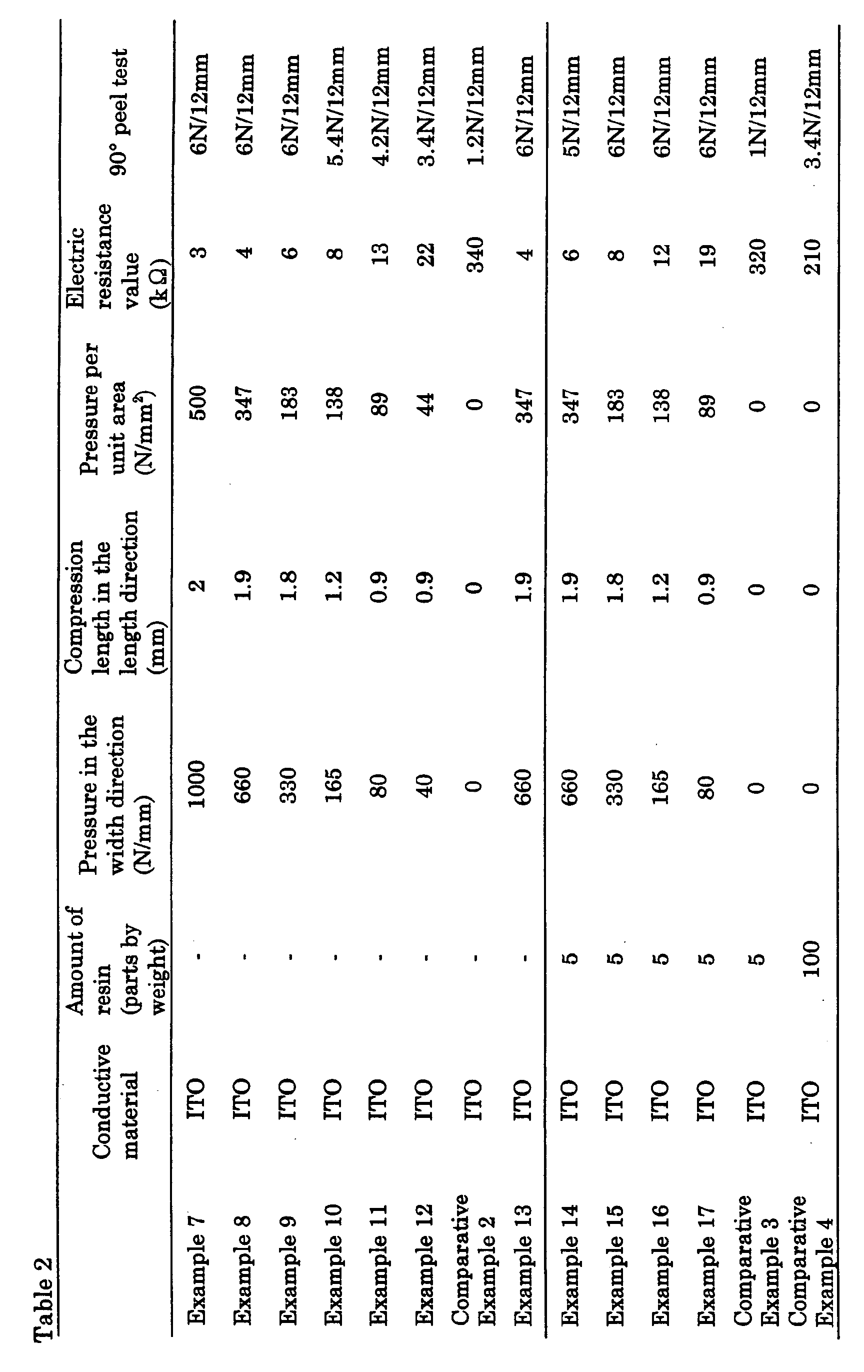

The results of measurement of Examples 7 to 17 and Comparative Examples 2 to 4 are shown in Table 2. The conductive films of Examples 7 to 17 each had a low electric resistance value, had a large coating layer strength, and was excellent in close adhesion between the conductive layer and the support film.

From Examples 7 to 12 and Examples 14 to 17, it was found out that, according as the pressing pressure increased, the electric conductivity became better, the coating layer strength became larger, and the close adhesion between the conductive layer and the support film became firm to such an extent that the adhesive of the cellophane tape remained on the conductive surface.

As conductive fine particles, ITO provided a more excellent electric conductivity than ATO. The conductive layer which contains no resin provided a more excellent electric conductivity than the conductive layer which contains resin. Also, the conductive films of Examples 7 to 17 each were excellent in transparency in terms of visible light transmittance.

In contrast, in Comparative Examples 2 and 3, since the compression step was not carried out, the electric resistance value was higher and the coating layer strength was inferior as compared with those of Examples 7 to 12 and Examples 14 to 17.

In Comparative Example 4, a large amount of binder resin was used so that the coating layer would be formed without compression as in the conventional case. Since the binder resin was used in a large amount, the strength of the coating layer was sufficient, but the electric resistance value was high.

The following Examples 18 to 20 are examples in which an inorganic material film was fabricated respectively with the use of tungsten oxide (WO₃) fine particles, titanium oxide (TiO₂) fine particles, and aluminum oxide (Al₂O₃) fine particles as the inorganic fine particles.

### [Example 18]

This Example is an example in which WO₃ fine particles are used for usage in an electrochromic display element.

To 100 parts by weight of WO₃ fine particles having a primary particle diameter of 50 to 100 nm were added 400 parts by weight of ethanol, and dispersion was carried out by means of a dispersion machine with the use of zirconia beads as a medium. The obtained coating liquid was applied onto a PET film having a thickness of 50 µm by means of a bar coater and dried by supplying hot air of 50°C. The obtained film will be hereafter referred to as a WO₃ film before compression. The WO₃-containing coating layer had a thickness of 1.0 µm.

In the same manner as in Example 1, the WO₃ film before compression was compressed at a pressure of 1,000 N/mm per unit length in the film width direction, at a pressure of 500 N/mm² per unit area, and at a feeding speed of 5 m/min with the use of a roll press machine, thereby to obtain a compressed WO₃ film. The WO₃ coating layer after compression had a thickness of 0.6 µm.

A 90° peel test was carried out on the obtained WO₃ film in the same manner as in the conductive film, so as to examine the state of the coating layer. A force of 6 N/12 mm was needed in peeling the cellophane tape off. On examination of the surface of the coating layer after the peel test, the adhesive of the cellophane tape adhered on the surface. The adhesive surface of the peeled cellophane tape was examined and found out to have an adhesiveness. Therefore, the strength of the coating layer was at least 6 N/12 mm. [Example 19]

This Example is an example in which TiO₂ fine particles are used for usage as a photocatalyst film.

To 100 parts by weight of TiO₂ fine particles having a primary particle diameter of 30 to 70 nm were added 900 parts by weight of ethanol, and dispersion was carried out by means of a dispersion machine with the use of zirconia beads as a medium. The obtained coating liquid was applied onto a PET film having a thickness of 50 µm by means of a bar coater and dried by supplying hot air of 50°C. The obtained film will be hereafter referred to as a TiO₂ film before compression. The TiO₂-containing coating layer had a thickness of 0.7 µm.

In the same manner as in Example 1, the TiO₂ film before compression was compressed at a pressure of 1,000 N/mm per unit length in the film width direction, at a pressure of 500 N/mm² per unit area, and at a feeding speed of 5 m/min with the use of a roll press machine, thereby to obtain a compressed TiO₂ film. The TiO₂ coating layer after compression had a thickness of 0.5 µm.

A 90° peel test was carried out on the obtained TiO₂ film in the same manner as in the conductive film, so as to examine the state of the coating layer. A force of 6 N/12 mm was needed in peeling the cellophane tape off. On examination of the surface of the coating layer after the peel test, the adhesive of the cellophane tape adhered on the surface. The adhesive surface of the peeled cellophane tape was examined and found out to have an adhesiveness. Therefore, the strength of the coating layer was at least 6 N/12 mm.

### [Example 20]

This Example is an example in which Al₂O₃ fine particles are used for usage as a catalyst film.

To 100 parts by weight of Al₂O₃ fine particles having a primary particle diameter of 5 to 20 nm were added 400 parts by weight of ethanol, and dispersion was carried out by means of a dispersion machine with the use of zirconia beads as a medium. The obtained coating liquid was applied onto a PET film having a thickness of 50 µm by means of a bar coater and dried by supplying hot air of 50°C. The obtained film will be hereafter referred to as a Al₂O₃ film before compression. The Al₂O₃-containing coating layer had a thickness of 1.2 µm.

In the same manner as in Example 1, the Al₂O₃ film before compression was compressed at a pressure of 1,000 N/mm per unit length in the film width direction, at a pressure of 500 N/mm² per unit area, and at a feeding speed of 5 m/min with the use of a roll press machine, thereby to obtain a compressed Al₂O₃ film. The Al₂O₃ coating layer after compression had a thickness of 0.8 µm.

A 90° peel test was carried out on the obtained Al₂O₃ film in the same manner as in the conductive film, so as to examine the state of the coating layer. A force of 6 N/12 mm was needed in peeling the cellophane tape off. On examination of the surface of the coating layer after the peel test, the adhesive of the cellophane tape adhered on the surface. The adhesive surface of the peeled cellophane tape was examined and found out to have an adhesiveness. Therefore, the strength of the coating layer was at least 6 N/12 mm.

The aforesaid Examples are examples in which inorganic functional films were fabricated respectively with the use of ATO fine particles, ITO fine particles, WO₃ fine particles, TiO₂ fine particles, and Al₂O₃ fine particles as the inorganic fine particles. Various inorganic functional films can be fabricated with the use of inorganic fine particles having various properties, in the same manner as in the aforesaid Examples.

The following Examples 21 to 24 are preferable examples of transparent conductive films in the present invention. [Example 21]

### 1. Formation of compressed layer of ITO fine particles

To 100 parts by weight of ITO fine particles having a primary particle diameter of 10 to 30 nm (manufactured by DOWA MINING Co., Ltd.) were added 300 parts by weight of ethanol, and dispersion was carried out by means of a dispersion machine with the use of zirconia beads as a medium. The obtained coating liquid was applied onto a PET film having a thickness of 50 µm by means of a bar coater and dried by supplying hot air of 50°C. The obtained film will be hereafter referred to as an ITO film (A) before compression. The ITO-containing coating layer had a thickness of 1.7 µm.

First, a preliminary experiment for confirming the compression pressure was carried out.

By means of a roll press machine equipped with a pair of metal rolls having a diameter of 140 mm (whose roll surface had been subjected to hard chromium plating treatment), the aforesaid ITO film (A) before compression was sandwiched and compressed at room temperature (23°C) without rotating the rolls and without heating the rolls. At this time, the pressure per unit length in the film width direction was 660 N/mm. Next, the pressure was released and the length of the compressed part in the film length direction was examined and found out to be 1.9 mm. From this result, it is found out that the film had been compressed by a pressure of 347 N/mm² per unit area.

Next, the aforesaid ITO film (A) before compression, which was the same one as used in the preliminary experiment, was sandwiched between the metal rolls and compressed under the aforesaid condition, and the rolls were rotated to compress the film at a feeding speed of 5 m/min. Thus, an ITO film (B) having a compressed layer of ITO fine particles was obtained. The ITO compressed layer had a thickness of 1.0 µm.

In the following Examples 22 and 23 also, the same ITO film (B) was used for impregnation with a transparent substance.

### (Measurement of electric resistance before impregnation)

The film having the ITO compressed layer formed thereon was cut into a size of 50 mm x 50 mm. The electric resistance was measured by applying a tester to two points on diagonally positioned corners and was found out to be 4 kΩ.

### (Measurement of haze before impregnation)

The haze was measured by means of a haze meter (TC-H3 DPK type, manufactured by Tokyo Denshoku Technical Center Co., Ltd.) and was found out to be 6%.

### 2. Impregnation with a transparent substance

### (Preparation of masking film)

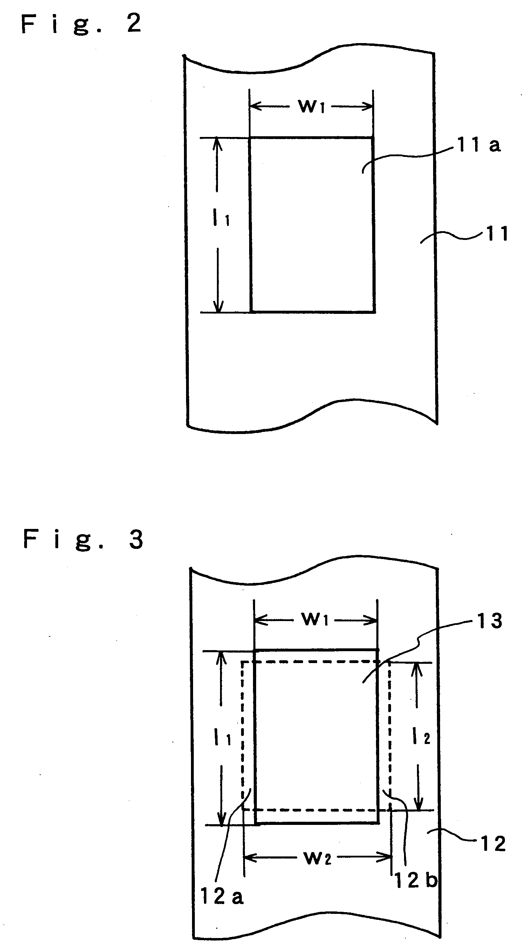

A PET film having a thickness of 10 µm was sandwiched in a roll press machine, and was compressed at a feeding speed of 5 m/min. by rotating rolls with a pressure of 50 N/mm per unit length in the width direction. The PET film was electrically charged by this operation. Referring to Fig. 2, a hole (11a) having a rectangular shape of 40 mm (w₁) in the width direction x 60 mm (l₁) in the length direction was drilled approximately at a central part (as viewed in the width direction) of the charged PET film. In the following steps, this was used as a masking film (11).

### (Impregnation with a transparent substance)

A silicone resin was used as the substance for impregnation. An impregnation liquid was obtained by adding 50 parts by weight of ethanol and 1.5 parts by weight of a hardening catalyst (CR-15, manufactured by GE Toshiba Silicones Co., Ltd.) to 100 parts by weight of silicone varnish (TSR-145, manufactured by GE Toshiba Silicones Co., Ltd., concentration of solid components: 60 wt%).

The electrically charged PET film (11) was attached onto the ITO compressed layer surface of the ITO film (B) obtained in the above step 1. for masking. The impregnation liquid was applied onto the masked ITO film (B) with the use of a bar coater, the masking film (11) was removed, and the film was dried by supplying hot air of 60°C. Subsequently, the silicone resin was hardened under a condition of 100°C for one hour. Referring to Fig. 3, the ITO compressed layer (12) was impregnated with the silicone resin, and at the same time, a protective layer (13) having a thickness of 4 µm was formed on the ITO compressed layer (12).

### (Measurement of electric resistance after impregnation)

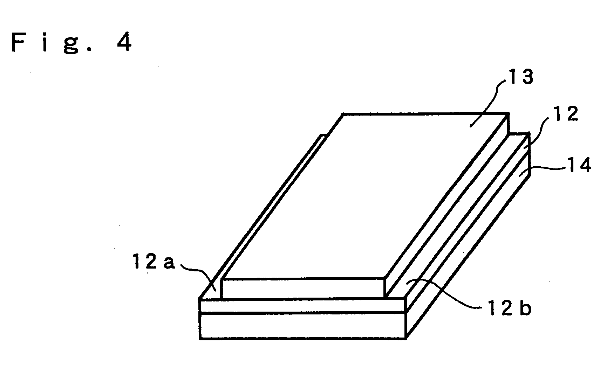

The ITO film subjected to the impregnation treatment was cut into a size of 50 mm (w₂) in the width direction x 50 mm (l₂) in the length direction so that both end parts (12a) (12b) on which the ITO compressed layer (12) surface was exposed would be included in the ITO film, as shown by a broken line in Fig. 3. Thus, a sample of a transparent conductive film of the present invention was obtained such as shown in Fig. 4 (with a support (14) in Fig. 4). The electric resistance was measured by applying a tester to two points on diagonally positioned corners at which the protective layer (13) was not formed, and was found out to be 4 kΩ.

### (Measurement of haze after impregnation)

The haze of the part (13) subjected to the impregnation treatment was measured and found out to be 2%.

### [Example 22]

As the substance for impregnation, the silicone resin of Example 21 was changed to acrylic resin. An impregnation liquid was obtained by adding 82 parts by weight of toluene to 100 parts by weight of acrylic resin solution (103B, manufactured by TAISEI CHEMICAL INDUSTRIES, LTD., concentration of solid components: 50 wt%).

The ITO compressed layer surface of the same ITO film (B) as used in Example 21 was masked in the same manner as in Example 21. The impregnation liquid was applied onto the masked ITO film (B) with the use of a bar coater, the masking film was removed, and the film was dried by supplying hot air of 60°C. The ITO compressed layer was impregnated with the acrylic resin, and at the same time, a protective layer having a thickness of 3.5 µm was formed on the ITO compressed layer.

The ITO film subjected to the impregnation treatment had an electric resistance of 4 kΩ. The part subjected to the impregnation treatment had a haze of 4%.

### [Example 23]

As the substance for impregnation, the type of the acrylic resin of Example 22 was changed. Also, the masking film used in the impregnation operation was changed to a PET film having a thickness of 15 µm.

An impregnation liquid was obtained by adding 100 parts by weight of toluene to 100 parts by weight of acrylic resin solution (1BR-305B, manufactured by TAISEI CHEMICAL INDUSTRIES, LTD., concentration of solid components: 39.5 wt%).

A PET film having a thickness of 15 µm and electrically charged in the same manner as in Example 21 was attached onto the ITO compressed layer surface of the same ITO film (B) as used in Example 21 for masking. The impregnation liquid was applied onto the masked ITO film (B) with the use of a bar coater, the masking film was removed, and the film was dried by supplying hot air of 60°C. The ITO compressed layer was impregnated with the acrylic resin, and at the same time, a protective layer having a thickness of 2.5 µm was formed on the ITO compressed layer.

The ITO film subjected to the impregnation treatment had an electric resistance of 4 kΩ. The part subjected to the impregnation treatment had a haze of 4%.

### [Comparative Example 5]

The ITO film (A) before compression in Example 21 was subjected to the impregnation treatment as it is without compression, in the same manner as in Example 21. The ITO layer was impregnated with the silicone resin, and at the same time, a protective layer having a thickness of 3.0 µm was formed on the ITO layer. The ITO film subjected to the impregnation treatment had an electric resistance of 210 kΩ. The part subjected to the impregnation treatment had a haze of 4%.

### [Comparative Example 6]

The ITO film (A) before compression in Example 21 was subjected to the impregnation treatment as it is without compression, in the same manner as in Example 22. The ITO layer was impregnated with the acrylic resin, and at the same time, a protective layer having a thickness of 3.0 µm was formed on the ITO layer. The ITO film subjected to the impregnation treatment had an electric resistance of 340 kΩ. The part subjected to the impregnation treatment had a haze of 7%.

### [Comparative Example 7]

The ITO film (A) before compression in Example 21 was subjected to the impregnation treatment as it is without compression, in the same manner as in Example 23. The ITO layer was impregnated with the acrylic resin, and at the same time, a protective layer having a thickness of 2.0 µm was formed on the ITO layer. The ITO film subjected to the impregnation treatment had an electric resistance of 340 kΩ. The part subjected to the impregnation treatment had a haze of 7%.

### [Example 24]

An ITO film (C) having an ITO compressed layer of 1.5 µm thickness was obtained in the same manner as in Example 23 except that the thickness of the ITO-containing layer of the ITO film (A) before compression in Example 23 was changed to 2.6 µm. The ITO film (C) had an electric resistance of 3 kΩ and a haze of 7%.

The ITO film (C) was subjected to the impregnation treatment in the same manner as in Example 23. The ITO compressed layer was impregnated with the acrylic resin, and at the same time, a protective layer having a thickness of 3.0 µm was formed on the ITO layer. The ITO film subjected to the impregnation treatment had an electric resistance of 3 kΩ. The part subjected to the impregnation treatment had a haze of 5%.

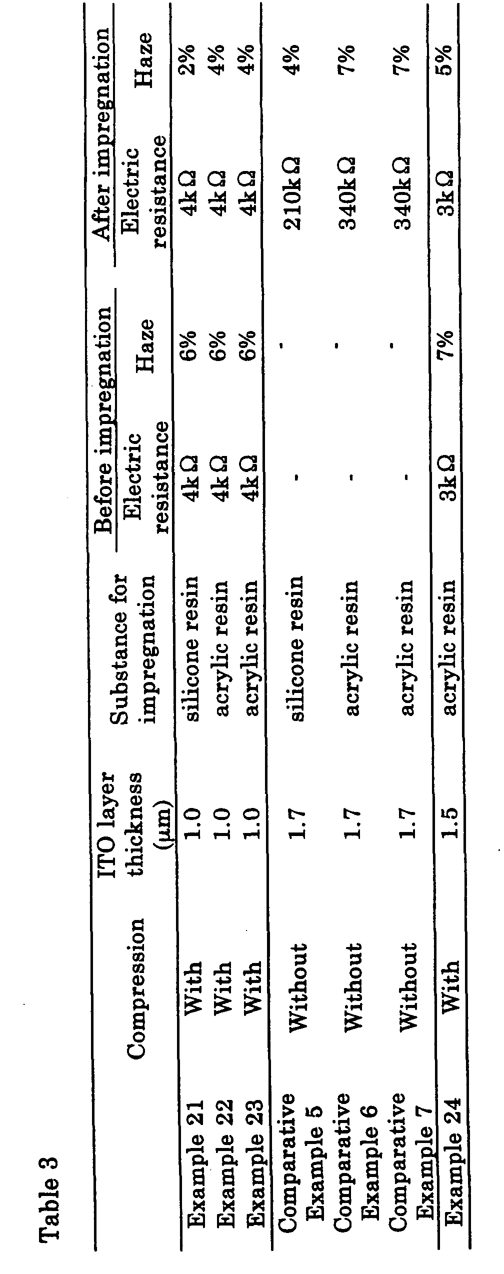

The results of Examples 21 to 24 and Comparative Examples 5 to 7 are shown in Table 3.

The conductive films of Examples 21 to 24 were excellent in that each had a low electric resistance value and a small haze. It is understood that, by impregnation with a transparent substance, an improvement in the haze was made without adversely affecting the electric resistance value. The reason why the degree of improvement in the haze was large in Example 21 seems to be that, since a silanol group is present in the silicone resin, the silicone resin has a good affinity with ITO, so that ITO was more densely impregnated with the silicone resin. A 90° peel test were respectively carried out on the conductive films of Examples 21 to 24 in the same manner as in Example 1. As a result, neither destruction nor peeling of each coating layer was observed.

On the other hand, since the compression operation was not carried out in Comparative Examples 5 to 7, the electric resistance value was high, and the obtained conductive films had a poor performance.

The foregoing Examples are in all aspects illustrative only and must not be construed as being restrictive. Further, all changes that fall within the range of equivalence of the claims are intended to be embraced within the scope of the present invention.

## Claims

1. A functional film comprising a compressed layer of functional fine particles obtained by compressing a layer containing the functional fine particles that is formed by application onto a support.

2. The functional film according to claim 1, wherein said layer containing the functional fine particles is formed by applying a liquid in which the functional fine particles are dispersed onto the support and drying the liquid.

3. The functional film according to claim 1, wherein said functional fine particles are selected from inorganic fine particles.

4. The functional film according to claim 1, wherein said compressed layer of the functional fine particles is obtained by compressing with a compression force of at least 44 N/mm².

5. The functional film according to claim 1, which is selected from an electrical conductive film, a magnetic film, a ferromagnetic film, a dielectric film, a ferroelectric film, an electrochromic film, an electroluminescent film, an insulating film, a light-absorbing film, a light selecting absorbing film, a reflecting film, a reflection preventing film, a catalyst film and a photocatalyst film.

6. The functional film according to claim 1, wherein said support is a film made of resin.

7. The functional film according to claim 1, wherein said functional fine particles are conductive fine particles, whereby said functional film has a function as a conductive film.

8. The functional film according to claim 1, wherein said functional fine particles are conductive fine particles, and said compressed layer is impregnated with a transparent substance, whereby said functional film has a function as a transparent conductive film.

9. The functional film according to claim 7 or 8, wherein said conductive fine particles are inorganic conductive fine particles selected from the group consisting of tin oxide, indium oxide, zinc oxide, cadmium oxide, antimony-doped tin oxide (ATO), fluorine-doped tin oxide (FTO), tin-doped indium oxide (ITO) and aluminum-doped zinc oxide (AZO).

10. A method of producing a functional film, said method comprising the steps of:
applying a liquid in which the functional fine particles are dispersed onto a support and drying the liquid, thereby to form a layer containing the functional fine particles; and thereafter
compressing said layer containing the functional fine particles to form a compressed layer of the functional fine particles.

11. The method of producing a functional film according to claim 10, wherein said layer containing the functional fine particles is compressed at a compression force of at least 44 N/mm².

12. The method of producing a functional film according to claim 10, wherein said layer containing the functional fine particles is compressed at such a temperature that said support is not deformed.

13. The method of producing a functional film according to claim 10, wherein said layer containing the functional fine particles is compressed using a roll press machine.

14. The method of producing a functional film according to claim 10, wherein said functional fine particles are conductive fine particles, and a resin is not contained in said liquid which contains the functional fine particles dispersed therein.

15. The method of producing a functional film according to claim 10, wherein said functional fine particles are conductive fine particles, and said method comprises the additional step of impregnating said formed compressed layer of the functional fine particles with a transparent substance.

16. A functional film comprising a compressed coating layer of functional fine particles on a support.
